# FASCICULE DE BREVET EUROPEEN

(11) **EP 3 732 360 B1**
(45) Date de publication et mention de la délivrance du brevet: **07.06.2023**
(21) Numéro de dépôt: 18842441.0
(22) Date de dépôt: 20.12.2018
(51) Int. Cl.: F02K 1/72

(54) **INVERSEUR DE POUSSÉE À GRILLES POUR TURBORÉACTEUR**
KASKADENSCHUBUMKEHRER EINES TURBOFANTRIEBWERKS
GRID-TYPE THRUST REVERSER FOR TURBOJET ENGINE

(30) Priorité: 28.12.2017 FR 1763328
(43) Date de publication de la demande: 04.11.2020
(73) Titulaire: Safran Nacelles, 76700 Gonfreville-l'Orcher (FR)
(72) Inventeur: GRALL, Loïc, 76700 GONFREVILLE L'ORCHER (FR); HEAU, Alexis, 76700 GONFREVILLE L'ORCHER (FR); BREBION, Benjamin, 76700 GONFREVILLE L'ORCHER (FR); GUILLEMANT, Sébastien, Michel, Thierry, 76700 GONFREVILLE L'ORCHER (FR); SERISET, Mélody, 76700 GONFREVILLE L'ORCHER (FR); BOILEAU, Patrick, 76700 GONFREVILLE L'ORCHER (FR)
(74) Mandataire: Germain Maureau
(86) Numéro de dépôt international: PCT/FR2018/053463
(87) Numéro de publication internationale: WO 2019/129961

(56) Documents cités:
- EP-A1- 2 129 901
- WO-A1-2019/036053
- FR-A1- 2 907 759
- FR-A1- 2 911 372
- US-A1- 2013 220 435
- US-A1- 2014 000 237
- US-A1- 2016 201 600

## Description

L'invention concerne un inverseur de poussée à grilles pour turboréacteur destiné à former au moins une partie d'une section aval d'une nacelle abritant le turboréacteur.

L'invention concerne plus particulièrement un inverseur de poussée du type en O.

Un aéronef est généralement mû par plusieurs turboréacteur logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un dispositif d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

Dans le cas d'un inverseur à grilles de déviation, la réorientation du flux d'air froid est effectuée par des grilles de déviation, associées à des volets d'inversion venant bloquer au moins partiellement la veine de circulation du flux froid.

Le document US2016/201600 A1 divulgue un inverseur de poussée à grilles selon l'art antérieur.

On connait au moins deux types d'inverseurs de poussée, un inverseur du type en D, appelé « D duct » en terminologie anglaise, et un inverseur du type en O, appelé « O duct » en terminologie anglaise.

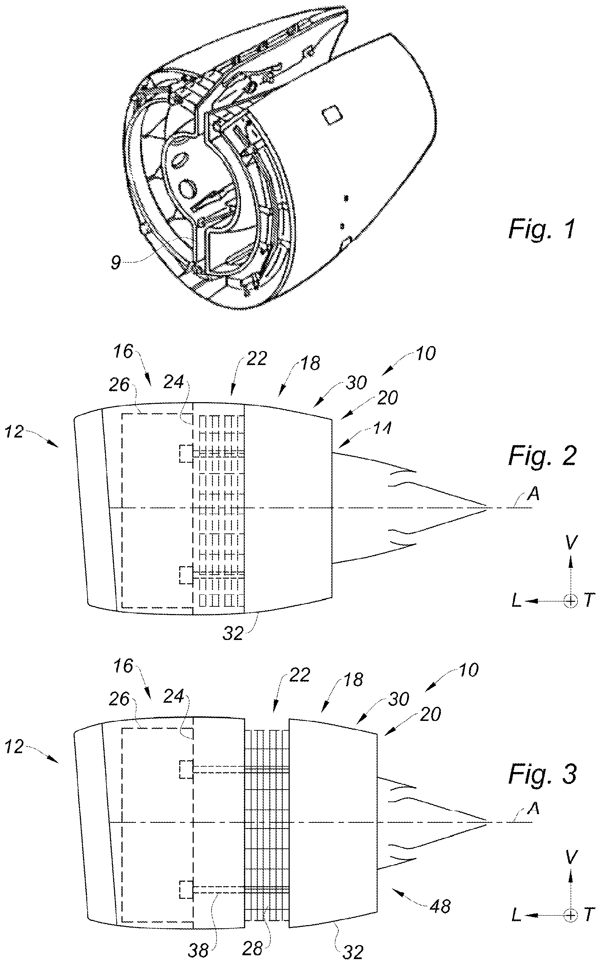

Typiquement, l'inverseur en D comporte deux demi-structures, de forme sensiblement hémicylindrique, comme on peut le voir sur la présente figure 1.

Les deux demi-structures en D forment une structure externe fixe, dite Outer Fixed Structure (OFS) et une structure interne fixe concentrique, dite Inner Fixed Structure (IFS), entourant une section aval du turboréacteur abritant le générateur de gaz, ou moteur, du turboréacteur.

Les structures interne et externe fixes définissent la veine destinée à canaliser le flux d'air froid qui circule à l'extérieur du turboréacteur.

De plus, chaque demi-structure porte un demi-capot en D, les demi-capots en C étant montés coulissant entre une position de jet direct dans laquelle les demi-capots couvrent les grilles d'inversion de poussée, et une position d'inversion de poussée dans laquelle les demi-capots découvrent les grilles d'inversion de poussée.

Aussi, les deux demi-structures sont montées pivotantes en papillon sur le pylône en partie supérieure (à 12 heures) par des charnières parallèles à l'axe longitudinal de la nacelle, entre une position fermée et une position ouverte en papillon de maitenance en vue de donner accès au générateur de gaz lors des opérations de maitenance.

Ce type d'inverseur dit en D favorise l'accès au turboréacteur lorsque les deux demi-structures sont ouvertes en papillon en position ouverte de maintenance, et permettent une dépose rapide du turboréacteur.

L'inverseur en O comprend un mobile d'inversion de poussée en une seule partie sans rupture en partie inférieure, une telle structure est décrite dans le document FR 2 911 372 par exemple.

Le mobile d'inversion de poussée présente une forme globalement cylindrique autour d'un axe longitudinal et comprend une paroi interne adaptée pour délimiter la veine d'air froid avec une structure interne qui entoure le turboréacteur.

Ainsi, le mobile d'inversion de poussée coulissant est dissocié de la structure interne entourant le moteur.

Le mobile d'inversion de poussée comprend également un capot externe.

Le mobile d'inversion de poussée est monté coulissant sur le pylône de suspension, suivant un axe longitudinal, entre une position de jet direct dans laquelle le capot externe couvre les grilles d'inversion de poussée, une position d'inversion de poussée dans laquelle le capot externe découvre les grilles d'inversion de poussée.

Un inconvénient de l'inverseur en O est le temps nécessaire à une opération de changement du turboréacteur.

En effet, l'opération de changement du turboréacteur nécessite la dépose du mobile d'inversion de poussée sur un chariot, cette dépose étant chronophage.

Par contre, l'absence d'obstacle dans la veine d'air froid de l'inverseur du type en O améliore la performance aérodynamique et la consommation de carburant de l'avion tout en augmentant l'efficacité de l'inverseur de poussée.

En effet, l'inverseur en D comporte une liaison, référencée 9 à la figure 1, entre la structure interne et le structure interne, qui s'étend dans la veine d'air froid.

De plus, l'inverseur du type en O est plus adapté à un inverseur à grilles coulissantes.

La présente invention vise notamment à proposer un inverseur de poussée qui combine les avantages des deux type d'inverseurs présentés ci-dessus.

Dans ce but, l'invention se rapporte à un inverseur de poussée à grilles pour turboréacteur destiné à former au moins une partie d'une section aval d'une nacelle abritant un turboréacteur, l'inverseur comportant :
- un cadre avant qui est adapté pour être monté en aval d'un carter de soufflante et qui supporte des grilles d'inversion de poussée,
- un mobile d'inversion de poussée du type en O qui présente une forme globalement cylindrique autour d'un axe central longitudinal et qui comprend une paroi interne adaptée pour délimiter une veine d'air froid avec une structure interne qui entoure le turboréacteur, et un capot externe, le mobile d'inversion de poussée étant monté coulissant suivant l'axe central longitudinal entre une position de jet direct dans laquelle le capot externe couvre les grilles d'inversion de poussée, une position d'inversion de poussée dans laquelle le capot externe découvre les grilles d'inversion de poussée, et
- un berceau qui est conçu pour relier une partie supérieure du mobile d'inversion de poussée sur un pylône de suspension de la nacelle afin d'assurer le coulissement du mobile d'inversion de poussée,
caractérisé en ce que le mobile d'inversion de poussée comprend une première demi-partie et une seconde demi-partie qui sont chacune globalement hémicylindriques et qui sont reliées entre elles dans une partie inférieure dudit mobile, par un premier dispositif de liaison démontable, la première demi-partie et la seconde demi-partie dudit mobile étant montées pivotantes chacune autour d'un axe de pivotement longitudinal, entre une position fermée et une position ouverte en papillon de dépose du turboréacteur, par l'intermédiaire du berceau.

L'inverseur selon l'invention permet de combiner les avantages d'une structure en O et les avantages d'une structure en D.

En effet, la veine d'air froid délimitée par le mobile est exempte de portions de raccord qui s'étend à travers la veine d'air froid.

De plus, le mobile selon l'invention est conçu pour occuper une position ouverte en papillon qui permet la dépose du turboréacteur sans devoir déposer le mobile.

Selon une autre caractéristique, le capot externe du mobile d'inversion de poussée comporte un premier demi-capot et un second demi-capot en C qui sont montés pivotants chacun autour d'un axe de pivotement longitudinal, entre une position fermée et une position ouverte en papillon de maintenance.

Le capot externe permet, par son ouverture, d'accéder au turboréacteur pour des interventions de maintenance.

Selon une autre caractéristique, il comporte un second dispositif de liaison démontable qui lie en coulissement les grilles de déviation sur le mobile d'inversion de poussée de façon démontable.

Cette caractéristique permet de désolidariser l'ensemble formé par les grilles et les actionneurs, de l'ensemble formé par le mobile d'inversion de poussée.

Selon une autre caractéristique, le second dispositif de liaison démontable est du type vis écrou.

Selon une autre caractéristique, le premier dispositif de liaison démontable est du type vis écrou.

Selon une autre caractéristique, le berceau comporte :
- un premier demi-berceau qui porte la première demi-partie du mobile d'inversion de poussée et qui est monté pivotant sur le pylône autour de l'axe de pivotement de la première demi-partie pour assurer le pivotement de la première demi-partie dudit mobile, et
- un second demi-berceau qui porte la seconde demi-partie du mobile d'inversion de poussée et qui est monté pivotant sur le pylône autour de l'axe de pivotement de la seconde demi-partie pour assurer le pivotement de la seconde demi-partie dudit mobile.

Selon une autre caractéristique, l'inverseur de poussée comporte un dispositif anti-rotation qui est conçu pour verrouiller en pivotement la première demi-partie et la seconde demi-partie dudit mobile dans leur position fermée.

Selon une autre caractéristique, le dispositif anti-rotation comporte :
- un premier verrou qui verrouille le premier demi-berceau en pivotement sur le pylône, et
- un second verrou qui verrouille le second demi-berceau en pivotement sur le pylône.

Selon une autre caractéristique, le premier demi-berceau comprend une liaison glissière qui relie la première demi-partie du mobile d'inversion de poussée sur le pylône de façon coulissante, et le second demi-berceau comprend une liaison glissière qui relie la seconde demi-partie du mobile d'inversion de poussée sur le pylône de façon coulissante.

Selon une autre caractéristique, l'inverseur de poussée comporte une pluralité d'actionneurs qui relient chacun le cadre avant de l'inverseur sur les grilles de déviation et qui sont conçus pour entraîner l'ensemble formé par les grilles de déviation et le mobile d'inversion de poussée en coulissement.

L'invention concerne aussi une nacelle pour turboréacteur d'aéronef comportant un inverseur de poussée du type décrit précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue d'une section arrière d'un inverseur de poussée d'une nacelle du type en D, selon l'art antérieur ;
- la figure 2 est une vue schématique de côté qui illustre une nacelle comportant un inverseur du type en O avec un mobile d'inversion de poussée en position de jet direct, selon l'invention ;
- la figure 3 est une schématique similaire à celle de la figure 2, qui illustre le mobile d'inversion de poussée de la figure 2 dans une position d'inversion de poussée ;
- la figure 4 est une vue schématique en section transversale qui illustre la première demi-partie du mobile d'inversion de poussée de la figure 2 dans sa position fermée ;
- la figure 5 est une vue schématique en section transversale qui illustre la première demi-partie du mobile d'inversion de poussée de la figure 2 dans sa position fermée et un capot externe en position ouverte en papillon ;
- la figure 6 est une vue schématique en section transversale qui illustre la première demi-partie du mobile d'inversion de poussée de la figure 2 dans sa position ouverte en papillon ;
- la figure 7 est une vue schématique en section transversale qui illustre le mobile d'inversion de poussée de la figure 2 et les actionneurs d'entraînement en coulissement du mobile d'inversion de poussée ;
- la figure 8 est une vue schématique en section longitudinale qui illustre un premier demi-berceau qui relie la première demi-partie du mobile d'inversion de poussée sur le pylône de suspension ;
- la figure 9 est une vue schématique en section transversale qui illustre le premier demi-berceau et la première demi-partie du mobile d'inversion de poussée dans sa position fermée ;
- la figure 10 est une vue schématique en section transversale qui illustre le premier demi-berceau et la première demi-partie du mobile d'inversion de poussée dans sa position ouverte en papillon ;
- la figure 11 est une vue schématique en section longitudinale qui illustre les grilles de déviation sur le mobile d'inversion de poussée qui est en position d'inversion de jet direct ;
- la figure 12 est une vue schématique similaire à celle de la figure 11 qui illustre le mobile d'inversion de poussée désolidarisé des grilles de déviation ;
- la figure 13 est une vue en perspective qui illustre l'ensemble qui est déposé lors d'une opération de dépose du turboréacteur, et qui comprend notamment le turboréacteur, les grilles de déviation et les actionneurs d'entraînement du mobile d'inversion de poussée ;
- la figure 14 est une vue en perspective qui illustre le mobile comprenant un capot externe, et une paroi interne qui délimite une veine d'air froid avec une structure interne qui entoure le turboréacteur.

Dans la description et les revendications, on adoptera à titre non limitatif la terminologie longitudinal, vertical et transversal en référence au trièdre L, V, T indiqué aux figures, dont l'axe L est parallèle à l'axe de la nacelle.

Sur l'ensemble de ces figures, des références identiques ou analogues représentent des organes ou ensembles d'organes identiques ou analogues.

A noter que dans la présente demande de brevet, les termes « amont » et «aval » doivent s'entendre par rapport à la circulation du flux d'air à l'intérieur de l'ensemble propulsif formé par la nacelle et le turboréacteur, c'est-à-dire de la gauche vers la droite sur la figure 2.

Dans la présente demande, les termes « supérieur », « inférieur » et leurs dérivés font référence à la position ou à l'orientation d'un élément ou d'un composant, cette position ou cette orientation étant considérée lorsque la nacelle est en configuration de service sur un aéronef au sol.

On a représenté aux figures 2 et 3 une nacelle 10 de turboréacteur qui présente une structure sensiblement tubulaire autour d'un axe A central longitudinal.

La nacelle 10 comprend une entrée d'air 12 en amont du turboréacteur 14, une section médiane 16 destinée à entourer une soufflante du turboréacteur, une section aval 18 destinée à entourer la chambre de combustion du turboréacteur 14, la nacelle 10 étant terminée par une tuyère d'éjection 20 dont la sortie est située en aval du turboréacteur 14.

De plus, la section aval 18 de la nacelle 10 comporte un inverseur de poussée 22 à grilles.

L'inverseur de poussée 22 comporte un cadre avant 24 qui est monté en aval du carter 26 de soufflante et qui supporte des grilles 28 d'inversion de poussée.

Aussi, l'inverseur de poussée 22 comporte un mobile 30 d'inversion de poussée du type en O qui présente une forme globalement cylindrique autour de l'axe A de la nacelle 10.

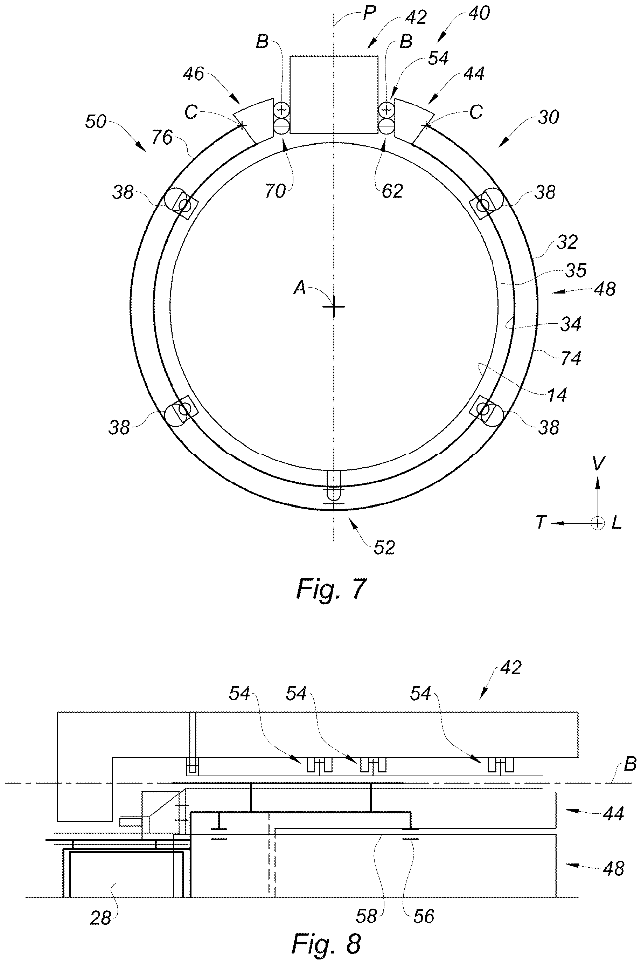

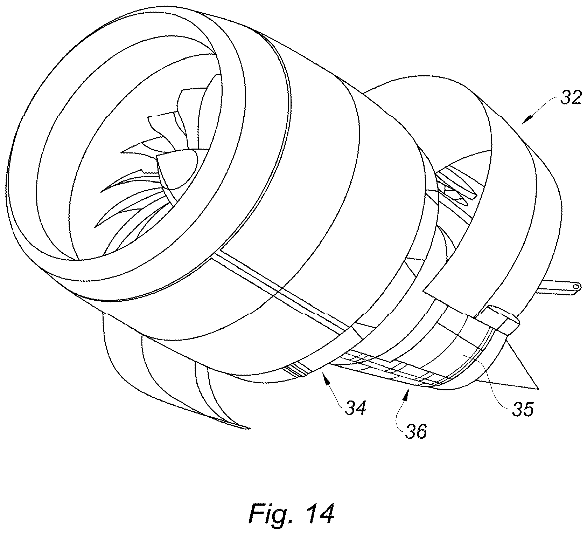

Comme on peut le voir aux figures 7 et 14, le mobile 30 comprend un capot externe 32, et une paroi interne 34 qui est adaptée pour délimiter une veine d'air froid 35 avec une structure interne 36 qui entoure le turboréacteur 14.

La structure interne 36 est formée de demi-capots qui sont adaptés pour s'ouvrir en papillon afin de donner accès au moteur 14.

Le mobile 30 d'inversion de poussée est monté coulissant suivant l'axe A central longitudinal, entre une position de jet direct illustrée à la figure 2, dans laquelle le capot externe 32 couvre les grilles 28 d'inversion de poussée, une position d'inversion de poussée illustrée à la figure 3, dans laquelle le capot externe 32 découvre les grilles 28 d'inversion de poussée.

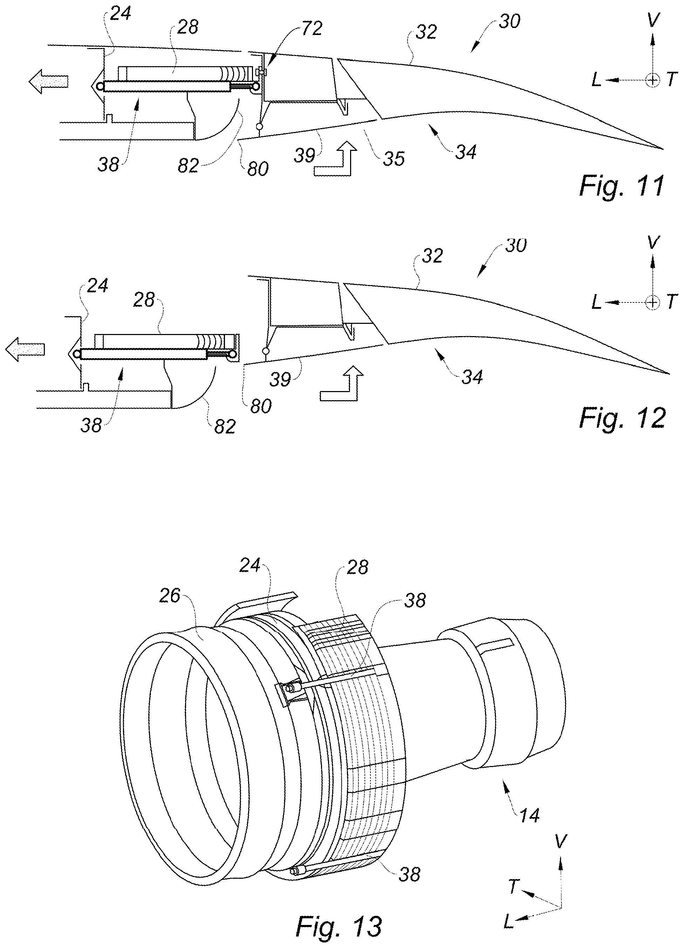

A cet effet, comme on peut le voir notamment aux figures 7 et 13, l'inverseur de poussée 22 comporte quatre actionneurs 38 du type vérin (dont deux sont visibles à la figure 13), qui relient chacun le cadre avant 24 sur un cadre arrière des grilles 28 de déviation et qui sont conçus pour entraîner l'ensemble formé par les grilles 28 et le mobile 30 d'inversion de poussée en coulissement entre sa position de jet direct et sa position d'inversion de poussée.

Aussi, les grilles 28 sont reliées sur le mobile 30, de sorte que les grilles 28 sont entraînées en coulissement avec le mobile 30 par les actionneurs 38. Dans ce but, les grilles sont montées coulissante sur une piste de guidage (non visible).

Plus particulièrement, le cadre arrière des grilles 28 est relié sur le mobile 30.

Comme on peut le voir à la figure 11, le mobile 30 porte des volets 39 qui sont montés pivotant dans la veine d'air froid 35, entre une position de repos illustrée à la figure 11, qui correspond à la position de jet direct du mobile 30, et une position d'inversion de poussée (non représentée), qui correspond à la position d'inversion de poussée du mobile 30, dans laquelle les volets 39 dirigent le flux d'air vers les grilles 28.

On notera que l'inverseur de poussée 22, et la nacelle 10 en générale, présentent une conception symétrique suivant un plan P de symétrique, illustré à la figure 7, qui s'étend verticalement en passant par l'axe A central de la nacelle 10.

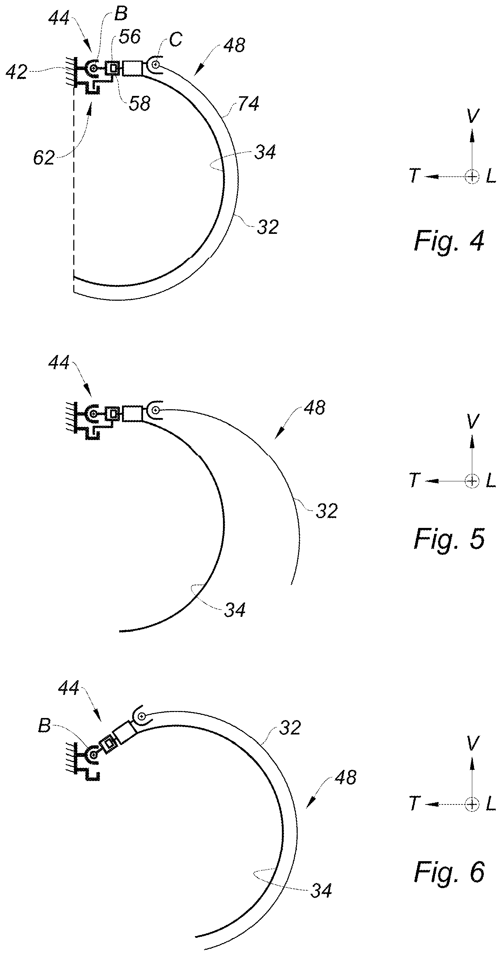

L'inverseur de poussée 22 comprend un berceau 40 qui est visible en partie sur les figures 4 à 10, et qui est conçu pour relier une partie supérieure du mobile 30 d'inversion de poussée sur un pylône 42 de suspension de la nacelle 10 afin d'assurer notamment le coulissement du mobile 30 d'inversion de poussée.

Le berceau 40 comporte un premier demi-berceau 44 et un second demi-berceau 46 visible à la figure 7, qui est agencé symétriquement au premier demi-berceau 44 et qui est identique au premier demi-berceau 44.

Par soucis de concision, seul le premier demi-berceau 44 est décrit par la suite.

De même, le mobile 30 d'inversion de poussée comprend une première demi-partie 48 et une seconde demi-partie 50 qui sont chacune globalement hémicylindriques et qui sont reliées entre elles dans une partie inférieure du mobile 30, par un premier dispositif de liaison 52 démontable.

Le premier dispositif de liaison 52 démontable est du type vis écrou. Toutefois, à titre non limitatif, le premier dispositif de liaison 52 peut être un verrou ou tout autre dispositif de liaison démontable connu.

Plus particulièrement, le premier dispositif de liaison 52 comprend une première bride et une seconde bride qui sont en appui dans un plan vertical et longitudinal et qui sont reliées entre elles par des vis.

La première demi-partie 48 et la seconde demi-partie 50 du mobile 30 sont identiques par symétrie suivant le plan P de symétrie, de sorte que seule la première demi-partie 48 du mobile 30 est décrite par la suite.

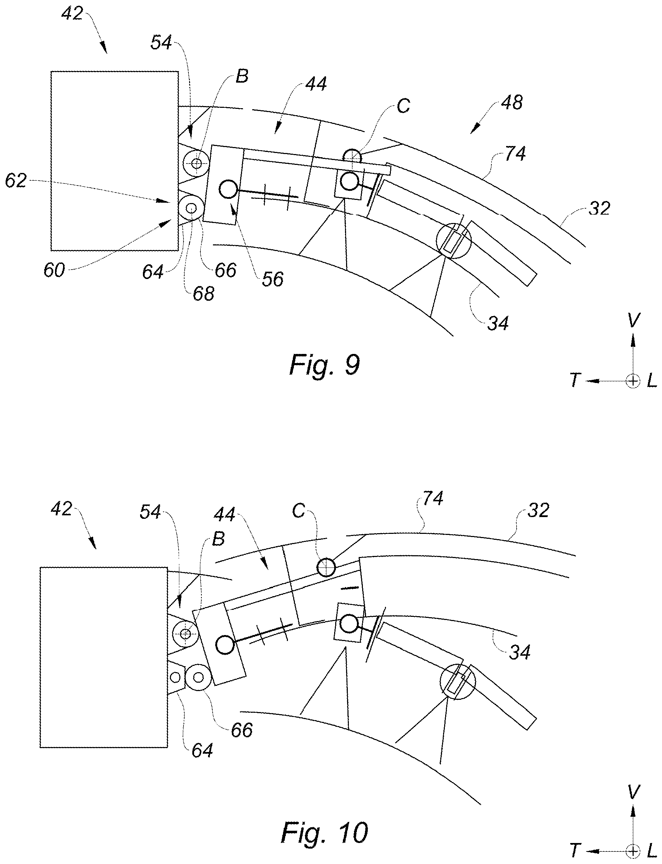

La première demi-partie 48 et la seconde demi-partie 50 du mobile 30 sont montées pivotantes chacune autour d'un axe B de pivotement longitudinal, entre une position fermée illustrée aux figures 7, 4 et 9 et une position ouverte en papillon de dépose du turboréacteur 14, illustrée aux figures 6 et 10, par l'intermédiaire du berceau 40.

A cet effet, le premier demi-berceau 44 porte la première demi-partie 48 du mobile 30 d'inversion de poussée, et le premier demi-berceau 44 est monté pivotant sur le pylône 42 autour de l'axe B de pivotement, au moyen de trois charnières 54 visibles à la figure 8, pour assurer le pivotement de la première demi-partie 48 du mobile 30.

De plus, en référence aux figures 4, 8 et 9, le premier demi-berceau 44 comporte une glissière 56 longitudinale qui coopère avec un rail 58 solidaire du mobile 30 d'inversion de poussée, pour permettre le coulissement du mobile 30 entre sa position de jet direct et sa position d'inversion de poussée.

Afin de verrouiller en pivotement la première demi-partie 48 et la seconde demi-partie 50 du mobile 30, dans leur position fermée, l'inverseur de poussée 22 comporte un dispositif anti-rotation 60 illustré aux figures 9 et 10.

Le dispositif anti-rotation 60 comporte un premier verrou 62 qui comprend une chape 64 solidaire du pylône 42 et un oeillet 66 solidaire du premier demi-berceau 44.

De plus, une goupille 68 amovible coopère avec l'œillet 66 et la chape 64 pour verrouiller le premier demi-berceau 44 sur le pylône, le retrait de la goupille 68 permettant de libérer en rotation le premier demi-berceau 44.

Par symétrie selon le plan P, l'inverseur de poussée 22 comporte un second verrou 70 visible à la figure 7 qui verrouille le second demi-berceau 46 en pivotement sur le pylône 42.

Selon un autre aspect illustré à la figure 11, l'inverseur de poussée 22 comporte un second dispositif de liaison 72 démontable qui lie en coulissement les grilles 28 de déviation sur le mobile 30 d'inversion de poussée de façon démontable.

Le second dispositif de liaison démontable 72 est du type vis écrou. Toutefois, à titre non limitatif, le second dispositif de liaison 72 peut être un verrou ou tout autre dispositif de liaison démontable connu.

Selon un autre aspect, le capot externe 32 du mobile 30 d'inversion de poussée comporte un premier demi-capot 74 et un second demi-capot 76 en C qui sont montés pivotants chacun autour d'un axe C de pivotement longitudinal, entre une position fermée illustrée à la figure 4, et une position ouverte en papillon de maintenance, illustrée à la figure 5.

A cet effet, comme on peut le voir à la figure 8, la structure de la première demi-partie 48 du mobile 30 comporte deux charnières 78 qui assurent le pivotement du premier demi-capot 74.

L'inverseur de poussée 22 selon l'invention permet une dépose rapide de l'ensemble formé par le turboréacteur 14, les grilles 28 et les actionneurs 38 visibles à la figure 13.

Dans ce but, une première étape consiste à coulisser vers l'arrière le mobile 30 depuis sa position de jet direct illustrée à la figure 11, jusqu'à une position de retrait illustrée à la figure 12 dans laquelle le bord avant 80 des volets 39 échappe au bord de déviation 82 lors de l'ouverture en papillon du mobile 30.

Dans une deuxième étape, le second dispositif de liaison 72 démontable qui lie en coulissement les grilles 28 de déviation sur le mobile 30 d'inversion de poussée est démonté pour libérer l'ensemble formé par le mobile 30, le berceau 40 et les volets 39.

Dans une troisième étape, le dispositif anti-rotation 60 est déverrouillé pour libérer en pivotement la première demi-partie 48 et la seconde demi-partie 50 du mobile 30.

Enfin, dans une quatrième étape, la première demi-partie 48 et la seconde demi-partie 50 du mobile 30 sont entraînées en pivotement depuis leur position fermée, jusqu'à leur position ouverte en papillon de dépose du turboréacteur 14.

La présente description de l'invention est donnée à titre d'exemple non limitatif.

## Revendications

1. Inverseur de poussée (22) à grilles pour turboréacteur destiné à former au moins une partie d'une section aval (18) d'une nacelle (10) abritant un turboréacteur (14), l'inverseur comportant :
- un cadre avant (24) qui est adapté pour être monté en aval d'un carter de soufflante (26) et qui supporte des grilles (28) d'inversion de poussée,
- un mobile (30) d'inversion de poussée du type en O qui présente une forme globalement cylindrique autour d'un axe (A) central longitudinal et qui comprend une paroi interne (34) adaptée pour délimiter une veine d'air froid avec une structure interne (36) qui entoure le turboréacteur (14), et un capot externe (32), le mobile (30) d'inversion de poussée étant monté coulissant suivant l'axe (A) central longitudinal entre une position de jet direct dans laquelle le capot externe (32) couvre les grilles (28) d'inversion de poussée, et une position d'inversion de poussée dans laquelle le capot externe (32) découvre les grilles (28) d'inversion de poussée, et
- un berceau (40) qui est conçu pour relier une partie supérieure du mobile (30) d'inversion de poussée sur un pylône (42) de suspension de la nacelle (10) afin d'assurer le coulissement du mobile (30) d'inversion de poussée,
**caractérisé en ce que** le mobile (30) d'inversion de poussée comprend une première demi-partie (48) et une seconde demi-partie (50) qui sont chacune globalement hémicylindriques et qui sont reliées entre elles dans une partie inférieure dudit mobile (30), par un premier dispositif de liaison (52) démontable, la première demi-partie (48) et la seconde demi-partie (50) dudit mobile (30) étant montées pivotantes chacune autour d'un axe (B) de pivotement longitudinal, entre une position fermée et une position ouverte en papillon de dépose du turboréacteur (14), par l'intermédiaire du berceau (40).

2. Inverseur de poussée (22) à grilles selon la revendication 1, **caractérisé en ce que** le capot externe (32) du mobile d'inversion de poussée comporte un premier demi-capot (74) et un second demi-capot (76) en C qui sont montés pivotants chacun autour d'un axe (C) de pivotement longitudinal, entre une position fermée et une position ouverte en papillon de maintenance.

3. Inverseur de poussée (22) à grilles selon l'une quelconque des revendications précédentes, **caractérisé en ce qu'**il comporte un second dispositif de liaison (72) démontable qui lie en coulissement les grilles (28) de déviation sur le mobile (30) d'inversion de poussée de façon démontable.

4. Inverseur de poussée (22) à grilles selon la revendication 3, **caractérisé en ce que** le second dispositif de liaison (72) démontable est du type vis écrou.

5. Inverseur de poussée (22) à grilles selon l'une quelconque des revendications précédentes, **caractérisé en ce que** le premier dispositif de liaison (52) démontable est du type vis écrou.

6. Inverseur de poussée (22) à grilles selon l'une quelconque des revendications précédentes, **caractérisé en ce que** le berceau (40) comporte :
- un premier demi-berceau (44) qui porte la première demi-partie (48) du mobile (30) d'inversion de poussée et qui est monté pivotant sur le pylône (42) autour de l'axe (B) de pivotement de la première demi-partie (48) pour assurer le pivotement de la première demi-partie (48) dudit mobile (30), et
- un second demi-berceau (46) qui porte la seconde demi-partie (50) du mobile (30) d'inversion de poussée et qui est monté pivotant sur le pylône (42) autour de l'axe (B) de pivotement de la seconde demi-partie (50) pour assurer le pivotement de la seconde demi-partie (50) dudit mobile (30).

7. Inverseur de poussée (22) à grilles selon l'une quelconque des revendications précédentes, **caractérisé en ce qu'**il comporte un dispositif anti-rotation (60) qui est conçu pour verrouiller en pivotement la première demi-partie (48) et la seconde demi-partie (50) dudit mobile (30) dans leur position fermée.

8. Inverseur de poussée (22) à grilles selon la revendication 7 considérée comme dépendante de la revendication 6, **caractérisé en ce que** le dispositif anti-rotation (60) comporte :
- un premier verrou (62) qui verrouille le premier demi-berceau (44) en pivotement sur le pylône (42), et
- un second verrou (70) qui verrouille le second demi-berceau (46) en pivotement sur le pylône (42).

9. Inverseur de poussée (22) à grilles selon la revendication 6 ou l'une quelconque des revendications 7 à 8 considérées comme dépendantes de la revendication 6, **caractérisé en ce que** le premier demi-berceau (44) comprend une liaison glissière qui relie la première demi-partie (48) du mobile (30) d'inversion de poussée sur le pylône (42) de façon coulissante, et le second demi-berceau (46) comprend une liaison glissière qui relie la seconde demi-partie (50) du mobile (30) d'inversion de poussée sur le pylône (42) de façon coulissante.

10. Inverseur de poussée (22) à grilles selon l'une quelconque des revendications précédentes, **caractérisé en ce qu'**il comporte une pluralité d'actionneurs (38) qui relient chacun le cadre avant (24) de l'inverseur sur les grilles (28) de déviation et qui sont conçus pour entraîner l'ensemble formé par les grilles (28) de déviation et le mobile (30) d'inversion de poussée en coulissement.

11. Inverseur de poussée (22) à grilles selon l'une quelconque des revendications précédentes, **caractérisé en ce que** le mobile (30) d'inversion de poussée est désolidarisé de la structure interne (36).

12. Nacelle (10) pour turboréacteur d'aéronef comportant un inverseur de poussée (22) selon l'une quelconque des revendications précédentes.

## Patentansprüche

1. Schubumkehrvorrichtung (22) mit Gittern für einen Turbostrahltriebwerk, die dazu bestimmt ist, mindestens einen Teil eines stromabwärtigen Abschnitts (18) einer Gondel (10), in der ein Turbostrahltriebwerk (14) untergebracht ist, wobei die Schubumkehrvorrichtung Folgendes umfasst:
- einen Frontrahmen (24), der angepasst ist, um stromabwärts eines Bläsergehäuses (26) montiert zu werden, und der Schubumkehrgitter (28) trägt,
- ein Schubumkehrelement (30) vom O-Typ, das eine im Allgemeinen zylindrische Form um eine zentrale Längsachse (A) hat und der eine Innenwand (34) umfasst, die ausgelegt ist, einen Kaltluftstrom mit einer Innenstruktur (36) zu begrenzen, die das Turbostrahltriebwerk (14) umgibt, und eine Außenverkleidung (32), wobei das Schubumkehrelement (30) entlang der zentralen Längsachse (A) zwischen einer Direktstrahlposition, in der die Außenverkleidung (32) die Schubumkehrgitter (28) abdeckt, und einer Schubumkehrposition, in der die Außenverkleidung (32) die Schubumkehrgitter (28) freilegt, gleitend montiert ist, und
- ein Gestell (40), das dafür vorgesehen ist, einen oberen Teil des Schubumkehrelements (30) mit einem Aufhängungsmast (42) der Gondel (10) zu verbinden, um das Gleiten des Schubumkehrelements (30) zu gewährleisten,
**dadurch gekennzeichnet, dass** das Schubumkehrelement (30) ein erstes Halbteil (48) und ein zweites Halbteil (50) umfasst, die jeweils im Allgemeinen halbzylindrisch sind und in einem unteren Teil des Elements (30) durch eine erste Verbindungseinrichtung (52) entfernbar miteinander verbunden sind, wobei das erste Halbteil (48) und das zweite Halbteil (50) des Elements (30) jeweils schwenkbar um eine Längsschwenkachse (B) zwischen einer geschlossenen Position und einer offenen Position in der Absperrklappe (14) des Turbostrahltriebwerks (14) mittels der Halterung (40) montiert sind.

2. Schubumkehrvorrichtung (22) mit Gittern nach Anspruch 1, **dadurch gekennzeichnet, dass** die Außenverkleidung (32) des Schubumkehrelements eine erste Halbabdeckung (74) und eine zweite Halbabdeckung (76) in C-Form umfasst, die jeweils schwenkbar um eine Längsschwenkachse (C) zwischen einer geschlossenen Position und einer offenen Position in der Wartungsklappe schwenkbar gelagert sind.

3. Schubumkehrvorrichtung (22) mit Gittern nach einem der vorhergehenden Ansprüche, **dadurch gekennzeichnet, dass** sie eine zweite entfernbare Verbindungsvorrichtung (72) umfasst, die die Ablenkgitter (28) gleitend mit dem Schubumkehrelement (30) auf entfernbare Weise verbindet.

4. Schubumkehrvorrichtung (22) mit Gittern nach Anspruch 3, **dadurch gekennzeichnet, dass** die zweite entfernbare Verbindungsvorrichtung (72) vom Schrauben-Mutter-Typ ist.

5. Schubumkehrvorrichtung (22) mit Gittern nach einem der vorhergehenden Ansprüche, **dadurch gekennzeichnet, dass** die erste entfernbare Verbindungsvorrichtung (52) vom Schrauben-Mutter-Typ ist.

6. Schubumkehrvorrichtung (22) mit Gittern nach einem der vorhergehenden Ansprüche, **dadurch gekennzeichnet, dass** das Gestell (40) Folgendes umfasst:
- ein erstes Halbgestell (44), das das erste Halbteil (48) des Schubumkehrelements (30) trägt und das schwenkbar am Mast (42) um die Schwenkachse (B) des ersten Halbteils (48) montiert ist, um das Schwenken des ersten Halbteils (48) des Elements (30) zu gewährleisten, und
- ein zweites Halbgestell (46), das das zweite Halbteil (50) des Elements (30) trägt und das schwenkbar am Mast (42) um die Schwenkachse (B) des zweiten Halbteils (50) montiert ist, um das Schwenken des zweiten Halbteils (50) des Elements (30) zu gewährleisten.

7. Schubumkehrvorrichtung (22) mit Gittern nach einem der vorhergehenden Ansprüche, **dadurch gekennzeichnet, dass** sie eine Verdrehsicherung (60) umfasst, die dafür vorgesehen ist, das erste Halbteil (48) und das zweite Halbteil (50) des Elements (30) in ihrer geschlossenen Position schwenkbar zu arretieren.

8. Schubumkehrvorrichtung (22) mit Gittern nach Anspruch 7, wenn als abhängig von Anspruch 6 betrachtet, **dadurch gekennzeichnet, dass** die Verdrehsicherung (60) Folgendes umfasst:
- eine erste Arretierung (62), die das erste Halbgestell (44) beim Schwenken auf dem Mast (42) arretiert, und
- eine zweite Arretierung (70), die das zweite Halbgestell (46) beim Schwenken auf dem Mast (42) arretiert.

9. Schubumkehrvorrichtung (22) mit Gittern nach Anspruch 6 oder einem der Ansprüche 7 bis 8, wenn als abhängig von Anspruch 6 betrachtet, **dadurch gekennzeichnet, dass** das erste Halbgestell (44) eine Schiebeverbindung umfasst, die das erste Halbteil (48) des Schubumkehrelements (30) auf gleitbare Weise mit dem Mast (42) verbindet, und das zweite Halbgestell (46) eine Schiebeverbindung umfasst, die das zweite Halbteil (50) des Schubumkehrelements (30) auf gleitbare Weise mit dem Mast (42) verbindet.

10. Schubumkehrvorrichtung (22) mit Gittern nach einem der vorhergehenden Ansprüche, **dadurch gekennzeichnet, dass** sie mehrere Aktuatoren (38) umfasst, die jeweils den Frontrahmen (24) der Umkehrvorrichtung mit den Ablenkgittern (28) verbinden und die dafür vorgesehen sind, die aus den Ablenkgittern (28) gebildete Anordnung und das gleitende Schubumkehrelement (30) anzutreiben.

11. Schubumkehrvorrichtung (22) mit Gittern nach einem der vorhergehenden Ansprüche, **dadurch gekennzeichnet, dass** das Schubumkehrelement (30) von der inneren Struktur (36) getrennt ist.

12. Gondel (10) für ein Flugzeug-Turbostrahltriebwerk, umfassend eine Schubumkehrvorrichtung (22) nach einem der vorhergehenden Ansprüche.

## Claims

1. A cascade thrust reverser (22) for a turbojet engine intended to form at least one portion of a downstream section (18) of a nacelle (10) accommodating a turbojet engine (14), the thrust reverser including:
- a front frame (24) which is adapted to be mounted downstream of a fan casing (26) and which supports thrust reverser cascades (28),
- an O-type thrust reverser movable body (30) which has a generally cylindrical shape about a longitudinal central axis (A) and which comprises an inner wall (34) adapted to delimit a cold air flow path with an inner structure (36) which surrounds the turbojet engine (14), and an outer cowl (32), the thrust reverser movable body (30) being slidably mounted along the longitudinal central axis (A) between a direct jet position in which the outer cowl (32) covers the thrust reverser cascades (28), and a thrust reversal position in which the outer cowl (32) uncovers the thrust reverser cascades (28), and
- a cradle (40) which is designed to link an upper portion of the thrust reverser movable body (30) on a suspension pylon (42) of the nacelle (10) in order to ensure sliding of the thrust reverser movable body (30),
**characterized in that** the thrust reverser movable body (30) comprises a first half-portion (48) and a second half-portion (50) each being generally semi-cylindrical and linked to one another in a lower portion of said movable body (30), by a first removable link device (52), each of the first half-portion (48) and the second half-portion (50) of said movable body (30) being pivotally mounted about a longitudinal pivot axis (B), between a closed position and a butterfly-like open position for removing the turbojet engine (14), via the cradle (40).

2. The cascade thrust reverser (22) according to claim 1, **characterized in that** the outer cowl (32) of the thrust reverser movable body includes a C-shaped first half-cowl (74) and a C-shaped second half-cowl (76) each being pivotally mounted about a longitudinal pivot axis (C), between a closed position and a maintenance butterfly-like open position.

3. The cascade thrust reverser (22) according to any one of the preceding claims, **characterized in that** it includes a second removable link device (72) which slidably links the cascade vanes (28) on the thrust reverser movable body (30) in a removable way.

4. The cascade thrust reverser (22) according to claim 3, **characterized in that** the second removable link device (72) is a screw-nut type removable link device.

5. The cascade thrust reverser (22) according to any one of the preceding claims, **characterized in that** the first removable link device (52) is a screw-nut type removable link device.

6. The cascade thrust reverser (22) according to any one of the preceding claims, **characterized in that** the cradle (40) includes:
- a first half-cradle (44) which carries the first half-portion (48) of the thrust reverser movable body (30) and which is pivotally mounted on the pylon (42) about the pivot axis (B) of the first half-portion (48) so as to ensure pivoting of the first half-portion (48) of said movable body (30), and
- a second half-cradle (46) which carries the second half-portion (50) of the thrust reverser movable body (30) and which is pivotally mounted on the pylon (42) about the pivot axis (B) of the second half-portion (50) so as to ensure pivoting of the second half-portion (50) of said movable body (30).

7. The cascade thrust reverser (22) according to any one of the preceding claims, **characterized in that** it includes an anti-rotation device (60) which is designed to pivotally lock the first half-portion (48) and the second half-portion (50) of said movable body (30) in their closed position.

8. The cascade thrust reverser (22) according to claim 7 considered as dependent on claim 6, **characterized in that** the anti-rotation device (60) includes:
- a first lock (62) which locks the first half-cradle (44) pivotally on the pylon (42), and
- a second lock (70) which locks the second half-cradle (46) pivotally on the pylon (42).

9. The cascade thrust reverser (22) according to claim 6 or any one of claims 7 to 8 considered as dependent on claim 6, **characterized in that** the first half-cradle (44) comprises a slide connection which slidably links the first half-portion (48) of the thrust reverser movable body (30) on the pylon (42), and the second half-cradle (46) comprises a slide connection which slidably links the second half-portion (50) of the thrust reverser movable body (30) on the pylon (42).

10. The cascade thrust reverser (22) according to any one of the preceding claims, **characterized in that** it includes a plurality of actuators (38) each linking the front frame (24) of the thrust reverser on the cascade vanes (28) and which are designed to slidably drive the assembly formed by the cascade vanes (28) and the thrust reverser movable body (30).

11. The cascade thrust reverser (22) according to any one of the preceding claims, **characterized in that** the thrust reverser movable body (30) is detached from the inner structure (36).

12. A nacelle (10) for an aircraft turbojet engine including a thrust reverser (22) according to any one of the preceding claims.
